# EUROPEAN PATENT SPECIFICATION

(11) **EP 4 050 965 B1**
(45) Date of publication and mention of the grant of the patent: **12.02.2025**
(21) Application number: 19953532.9
(22) Date of filing: 19.11.2019
(51) Int. Cl.: H01Q 3/24, H01Q 21/28, H04W 88/08

(54) **GLOBAL NAVIGATION SATELLITE SYSTEM (GNSS) SIGNAL DISTRIBUTION SYSTEM AND GNSS BASE STATION**
GLOBALES NAVIGATIONSSATELLITENSYSTEM (GNSS) -SIGNALVERTEILUNGSSYSTEM UND GNSS-BASISSTATION
SYSTÈME DE DISTRIBUTION DE SIGNAL DE SYSTÈME MONDIAL DE NAVIGATION PAR SATELLITE (GNSS) ET STATION DE BASE GNSS

(43) Date of publication of application: 31.08.2022
(73) Proprietor: Huawei Technologies Co., Ltd., Shenzhen, Guangdong 518129 (CN)
(72) Inventor: ZHOU, Guangjian, Shenzhen, Guangdong 518129 (CN); LAN, Peng, Shenzhen, Guangdong 518129 (CN); ZHANG, Xiaodong, Shenzhen, Guangdong 518129 (CN); GU, Yang, Shenzhen, Guangdong 518129 (CN)
(74) Representative: Isarpatent
(86) International application number: PCT/CN2019/119542
(87) International publication number: WO 2021/097688

(56) References cited:
- CN-A- 110 069 011
- CN-U- 206 039 400
- CN-U- 206 818 883
- CN-U- 207 135 113
- CN-U- 207 135 113
- CN-U- 208 623 682
- CN-U- 209 433 011
- CN-U- 209 433 011
- US-A1- 2013 070 819

## Description

### TECHNICAL FIELD

This application relates to the field of communications technologies, and in particular, to a global navigation satellite system, GNSS, signal distribution system, and a system comprising a GNSS base station and the GNSS signal distribution system.

### BACKGROUND

A mobile communications base station, especially a fifth-generation (5th Generation, 5G) new radio (new radio, NR) time division duplexing (time division duplexing, TDD) base station, needs high-precision time synchronization signals and frequency synchronization signals. Providing time synchronization signals and frequency synchronization signals for a base station by deploying a global navigation satellite system (Global Navigation Satellite System, GNSS) in the base station is one of main manners of base station synchronization. Correspondingly, the base station with the GNSS system deployed is referred to as a GNSS base station.

When baseband units (baseband units, BBUs) are stacked in the GNSS base station in a centralized manner (that is, one base station equipment room has a plurality of BBUs), a power splitter needs to be installed inside an equipment room of the GNSS base station to distribute a GNSS signal received by a GNSS antenna. If the GNSS antenna needs to be deployed remotely, a fiber transmission component (such as an optical-to-electrical conversion module) needs to be further installed inside the equipment room of the GNSS base station. However, in a conventional technology, the foregoing components are separately installed when a GNSS base station is deployed. This leads to extremely inconvenient base station deployment. In addition, because each component needs to occupy an extra space in an equipment room, space utilization of the equipment room is low.

CN 207135113 U discloses a time service system used for realizing clock synchronization and a basic station.

CN 209433011 U discloses a PXI-based extensible continuously operating reference station and a GNSS foundation enhancement system.

### SUMMARY

This application provides a GNSS signal distribution system and a system comprising a GNSS base station and the GNSS signal distribution system, as defined in the appended set of claims, to implement simple, fast, and low-cost deployment of a GNSS base station and improve space utilization of a base station equipment room.

By using the GNSS signal distribution system provided by the foregoing solution, when a base station function (for example, GNSS signal splitting, GNSS signal amplification, GNSS signal surge protection, or optical-to-electrical conversion) is deployed in a base station, only a card with the corresponding function needs to be inserted into the slot on the rack-type power splitter based on a requirement. This can well meet function requirements in scenarios such as active splitting and remote deployment of a GNSS antenna, and can greatly reduce deployment difficulty of the GNSS base station. In addition, because the rack-type power splitter integrating the function such as distribution, surge protection, amplification, or an optical-to-electrical conversion module is disposed on a rack, a problem that an extra space needs to be occupied to separately dispose a power splitter, a surge protector, an amplifier, a fiber transmission component, or the like can be avoided. Spatial positions of components inside an equipment room of the GNSS base station are more properly and neatly deployed, thereby improving effective space utilization of the equipment room.

In an optional implementation, the functional module may include a signal amplification module, a surge protection module, a source selection module, a power supply module, an optical-to-electrical conversion module, a fiber distance measurement module, a photovoltaic power supply module, or the like.

This implementation provides a plurality of design schemes of the functional module, so that the function deployment of the base station is more flexible.

In an optional implementation, a signal splitting module may be built in the rack-type power splitter, and the splitting module is connected to each of the at least two BBUs. After processing, based on the functional module of the card inserted into the slot, the GNSS signal received from the GNSS antenna, the rack-type power splitter may distribute processed GNSS signals to the at least two BBUs based on the built-in signal splitting module.

In this implementation, by building the splitting module in the rack-type power splitter, the rack-type power splitter can complete the splitting function on the GNSS signal even if no card is inserted into the rack-type power splitter.

In an optional implementation, the signal splitting module may be disposed inside the card, that is, the functional module of the card includes the signal splitting module. In this way, the rack-type power splitter can be connected to each of the at least two BBUs by using the splitting module in the card inserted into the slot, and distribute the received GNSS signal to the at least two BBUs based on the signal splitting module in the card.

In this implementation, the splitting module is disposed in the card, so that a user can determine, based on a scenario requirement, whether to insert the card with the splitting function into the rack-type power splitter, thereby further improving deployment flexibility of the base station.

In an optional implementation, the slot supports insertion and removal of a first card, and the first card includes a first antenna branch, a second antenna branch, a source selection module, and a signal splitting module. The first antenna branch is configured to receive a GNSS signal sent by a first GNSS antenna. The second antenna branch is configured to receive a GNSS signal sent by a second GNSS antenna. The source selection module is configured to select one of the first antenna branch and the second antenna branch for access. The signal splitting module is configured to distribute, to the at least two BBUs, a GNSS signal output by the antenna branch selected by the source selection module for access.

In this implementation, different antenna branches can be flexibly selected based on a requirement for access, thereby improving solution flexibility

In an optional implementation, when one antenna branch is faulty, the source selection module may further switch to the other antenna branch for receiving from a signal source.

In this way, a 1+1 fault redundancy protection function can be implemented for the GNSS antennas, thereby ensuring reliability for GNSS signal receiving by the base station.

In an optional implementation, a surge protection module and an amplification module are disposed on each of the first antenna branch and the second antenna branch.

In this implementation, the antenna branch selected for access may further perform surge protection and amplification processing on the received GNSS signal. This can improve security performance of the base station, and further enrich types of functional modules in the card, thereby improving function deployment flexibility of the base station.

In an optional implementation, the slot may support insertion and removal of a second card, and the second card includes an optical-to-electrical conversion module and a signal splitting module. The optical-to-electrical conversion module is configured to perform optical-to-electrical conversion processing on an optical signal received from a fiber, to generate a GNSS signal. The optical signal is sent to the fiber for transmission after a remote antenna unit performs electrical-to-optical conversion on the GNSS signal received by the GNSS antenna. The signal splitting module is configured to distribute the GNSS signal generated by the optical-to-electrical conversion module to the at least two BBUs.

In this implementation, in a remote antenna deployment scenario, only the second card needs to be inserted into the slot, so that optical-to-electrical conversion processing can be performed on the optical signal received from the fiber, and the GNSS signal generated by the optical-to-electrical conversion module can be distributed to the at least two BBUs. A problem that an extra space needs to be occupied to separately dispose a power splitter, a fiber transmission component, or the like can be avoided. Spatial positions of components inside an equipment room of the GNSS base station are more properly and neatly deployed, thereby improving effective space utilization of the equipment room.

In an optional implementation, the second card may further include a photovoltaic power supply module.

In this implementation, electric energy can be provided to the remote antenna unit through a fiber, thereby reducing cabling costs for remote power supply

In an optional implementation, the second card further includes a fiber distance measurement module, configured to determine a fiber distance between the GNSS antenna and the GNSS signal distribution system based on transmission time of the optical signal in the fiber.

In this implementation, the fiber distance between the remote GNSS antenna and the GNSS signal distribution system (or the base station equipment room) may be automatically measured based on the GNSS signal distribution system, so as to further determine a distance between the GNSS antenna and the base station equipment room. The types of the functional modules in the card can be further enriched, thereby improving function deployment flexibility of the base station.

In an optional implementation, the at least two BBUs and the rack-type power splitter are all installed on a standard 19-inch rack.

In this implementation, deployment in an internal space of the equipment room can be made neater, thereby improving deployment convenience of the base station.

In an optional implementation, a size of the rack-type power splitter is 1U.

In this implementation, the card can be well adapted to the rack-type power splitter. This not only can avoid inconvenience in inserting the card into the slot that is caused by an oversized design of the card, but also can avoid a problem of an excessively small quantity of supported functional modules that is caused by an undersized card.

### BRIEF DESCRIPTION OF DRAWINGS

FIG. 1A and FIG. 1B are schematic diagrams of GNSS base stations in conventional technologies;
FIG. 2 is a schematic diagram of a structure of a possible GNSS signal distribution system according to an embodiment of this application;
FIG. 3A is a schematic diagram of a structure of a possible card according to an embodiment of this application;
FIG. 3B is a schematic diagram of a structure of another possible card according to an embodiment of this application;
FIG. 3C is a schematic diagram of a structure of still another possible card according to an embodiment of this application;
FIG. 3D is a schematic diagram of a structure of yet another possible card according to an embodiment of this application;
FIG. 3E is a schematic diagram of a structure of still yet another possible card according to an embodiment of this application;
FIG. 3F is a schematic diagram of a structure of a further possible card according to an embodiment of this application;
FIG. 3G is a schematic diagram of a structure of a still further possible card according to an embodiment of this application;
FIG. 4A is a schematic diagram of a GNSS signal distribution system in an active splitting scenario according to an embodiment of this application;
FIG. 4B is another schematic diagram of a GNSS signal distribution system in an active splitting scenario according to an embodiment of this application;
FIG. 4C is still another schematic diagram of a GNSS signal distribution system in an active splitting scenario according to an embodiment of this application;
FIG. 4D is a schematic diagram of a GNSS signal distribution system in a remote antenna deployment scenario according to an embodiment of this application; and
FIG. 4E is another schematic diagram of a GNSS signal distribution system in a remote antenna deployment scenario according to an embodiment of this application.

### DESCRIPTION OF EMBODIMENTS

In a scenario in which BBUs are stacked in a centralized manner, a plurality of BBUs are usually installed inside an equipment room of a base station. When a GNSS is deployed in the base station, if one GNSS antenna is correspondingly installed for each BBU, there are problems such as difficult installation and site selection and a large quantity of feeders. Therefore, a plurality of BBUs usually share one GNSS antenna, and a power splitter is used to distribute GNSS antenna signals to the different BBUs.

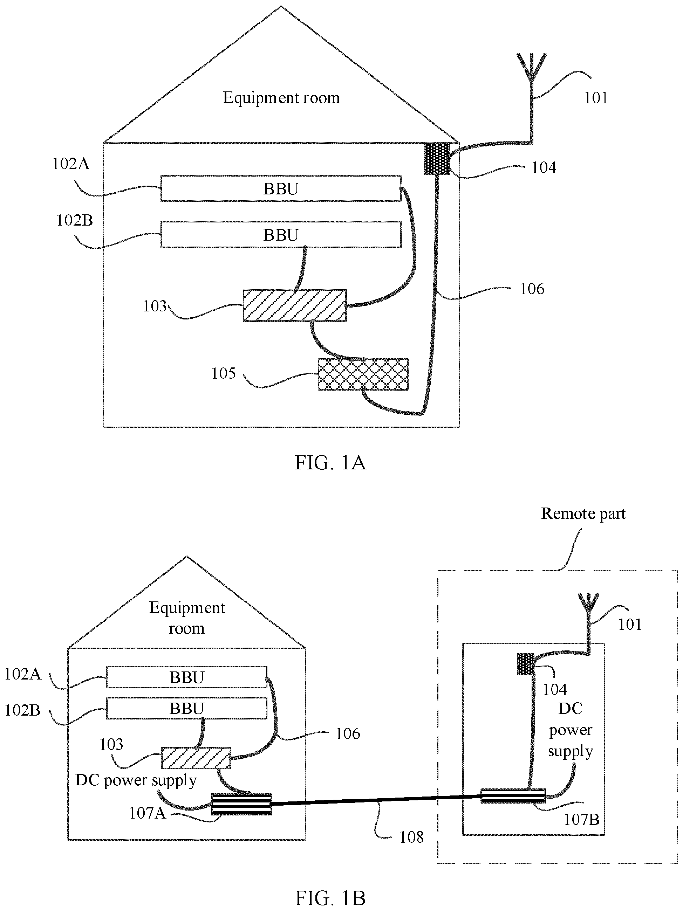

For example, as shown in FIG. 1A, a GNSS base station includes two BBUs. The GNSS base station includes components such as a GNSS antenna 101, at least two BBUs (two BBUs, that is, a BBU 102A and a BBU 102B, are used as an example in FIG. 1A), a power splitter 103, a surge protector 104, and a feeder 106. In actual application, the GNSS base station may further include an amplifier 105 if a GNSS antenna signal needs to be amplified. Generally, the GNSS antenna 101 is installed outside the equipment room, and the components such as the BBU 102A, the BBU 102B, the power splitter 103, the surge protector 104, the amplifier 105, and the GPS feeder 106 are installed inside the equipment room. After receiving a satellite signal, the GNSS antenna 101 transmits the signal to the inside of the equipment room through the feeder 106, and the power splitter 103 splits the signal into two signals and transmits the signals respectively to the BBU 102A and the BBU 102B for processing.

In a conventional technology, when a component such as the power splitter 103, the surge protector 104, or the amplifier 105 is installed, a discrete installation solution is usually used. To be specific, each component is installed independently if there is an installation requirement, and each component needs to occupy an extra space in an equipment room. There is a problem of extremely inconvenient installation and deployment. In addition, an installation position of each component is usually subjectively arranged by an installation person. There is usually a problem that a component such as the power splitter 103, the surge protector 104, or the amplifier 105 occupies a relatively large installation space inside the equipment room due to improper spatial deployment by the installation person, and a space inside the equipment room cannot be effectively utilized.

In some other scenarios, the GNSS antenna further needs to be installed remotely. If a remote deployment distance of the GNSS antenna is long (for example, a distance between a position of the GNSS antenna and the equipment room exceeds 1 km), a remote deployment distance of the feeder cannot meet a requirement. In this case, the satellite signal needs to be transmitted through a fiber. Correspondingly, an optical-to-electrical conversion module and an electrical-to-optical conversion module need to be installed respectively at one end of the fiber inside the equipment room and at a remote end of the fiber to perform conversion on an optical signal and an electrical signal.

For example, referring to FIG. 1B, the GNSS base station includes an equipment room part and a remote part (the remote part is shown by using a dashed line frame in FIG. 1B). The remote part includes the GNSS antenna 101, the surge protector 104, and an electrical-to-optical conversion module 107B. The electrical-to-optical conversion module 107B is configured to convert an electrical signal received from the GNSS antenna 101 into an optical signal, and then transmit the optical signal to a fiber 108 for transmission. An optical-to-electrical conversion module 107A is installed inside the equipment room, and is configured to restore the optical signal received from the fiber 108 into an electrical signal, and then distribute, by using the power splitter 103, the electrical signal to different BBUs for processing.

It can be seen from FIG. 1B that, in a remote deployment scenario, a fiber transmission component such as the optical-to-electrical conversion module 107A needs to be further installed inside the equipment room. However, in a conventional technology, the discrete installation solution is still used to install a fiber transmission component, and the optical-to-electrical conversion module 107A also needs to occupy an extra space inside the equipment room. Therefore, installation and deployment difficulty of the GNSS base station may be further increased and space utilization of the equipment room may be further reduced.

To resolve the foregoing technical problem in the conventional technology, embodiments of this application provide a GNSS signal distribution system and a GNSS base station, to implement simple, fast, and low-cost deployment of a GNSS base station and improve space utilization of a base station equipment room. The GNSS signal distribution system includes at least one rack-type power splitter and at least two BBUs. The BBUs and the rack-type power splitter each use a rack-type installation manner (that is, each is installed on a rack (for example, a standard 19-inch rack)). The rack-type power splitter is connected to each of the at least two BBUs. The rack-type power splitter supports a GNSS signal splitting function (that is, a function of the foregoing power splitter). A slot space may be further disposed on the rack-type power splitter to support insertion of a card with another function. The another function herein includes but is not limited to a function such as GNSS signal surge protection, GNSS signal amplification, or optical-to-electrical conversion. The GNSS signal splitting function may be disposed on the card, or may be built in the rack-type power splitter. This is not limited herein. When the card is inserted into the slot, the card is connected to the slot. Based on such a GNSS signal distribution system, when a base station function such as GNSS signal splitting, GNSS signal amplification, GNSS signal surge protection, or optical-to-electrical conversion is deployed in a base station, only a card with the corresponding function needs to be inserted into the slot on the rack-type power splitter based on a requirement. This can well meet function requirements in scenarios such as active splitting and remote deployment of a GNSS antenna, and can greatly reduce deployment difficulty of the GNSS base station. In addition, because the rack-type power splitter integrating the function such as distribution, surge protection, amplification, or an optical-to-electrical conversion module is disposed on a rack, a problem that an extra space needs to be occupied to separately dispose a power splitter, a surge protector, an amplifier, a fiber transmission component, or the like can be avoided. Spatial positions of components inside an equipment room of the GNSS base station are more properly and neatly deployed, thereby improving effective space utilization of the equipment room.

The following clearly and completely describes the technical solutions in embodiments of this application with reference to the accompanying drawings in embodiments of this application. It is clear that the described embodiments are some but not all of embodiments of this application. To make embodiments of this application clearer, the following collectively describes some content and concepts related to embodiments of this application.
(1) The base station in embodiments of this application may be configured to perform mutual conversion between a received over-the-air frame and an IP packet, and serve as a router between a wireless terminal device and a remaining part of an access network. The remaining part of the access network may include an Internet Protocol (IP) network device. The base station may further coordinate attribute management of an air interface. For example, the base station may be a network device in a 5G system, for example, a next generation NodeB (next generation NodeB, gNB), or may be a base transceiver station (base transceiver station, BTS) in a global system for mobile communications (global system for mobile Communications, GSM) or code division multiple access (code division multiple access, CDMA), or may be a NodeB (NodeB) in wideband code division multiple access (wideband code division multiple access, WCDMA), or may be an evolved NodeB (evolved NodeB, eNB or e-NodeB) in LTE. This is not limited in embodiments of this application.
(2) The GNSS in embodiments of this application is short for global navigation satellite system (global navigation satellite system). It refers to all satellite navigation systems in a general sense, including four major global satellite systems: the Beidou navigation satellite system (beidou navigation satellite system, BDS) from China, the global positioning system (Global Positioning System, GPS) from the United States, the global navigation satellite system (global navigation satellite system, GLONASS) from Russia, and the Galileo satellite navigation system (galileo satellite navigation system, Galileo) from the European Union, and related enhanced systems such as WAAS (Wide Area Augmentation System) from the United States, EGNOS (European Static Navigation Overlay System) from Europe, and MSAS (Multifunctional Transport Satellite Augmentation System) from Japan. The GNSS further covers other satellite navigation systems under construction and to be constructed in the future. The international GNSS system is a multi-system, multi-layer, multi-mode complex combination system.
(3) The GNSS base station in embodiments of this application is a base station on which the GNSS is deployed. The GNSS antenna in embodiments of this application is an antenna that can receive a GNSS signal.
(4) The rack is short for rack-type server, and is configured to fasten a board, a housing, and a device inside a telecommunications cabinet. The rack is usually 19 inches wide and 7 feet high. In the communications industry, the rack may be simply understood as a cabinet for storing a telecommunications device (such as a BBU device). It has an appearance similar to that of a switch instead of a computer, and is 1U (U is a unit (measurement unit: height or thickness) for denoting an external size of a server, and is short for unit; 1U is equal to 1.75 inches), 2U, or 4U, or has other specifications. A rack-type server may be installed in a standard 19-inch cabinet and is a functional server. Therefore, a standard rack is also referred to as a 19-inch rack.
(5) The rack-type power splitter in embodiments of this application may be understood as a device or apparatus that has a GNSS signal splitting function and that can be installed on the rack in embodiments of this application. A size of the rack-type power splitter may be 1U, 2U, 3U, or the like. This is not limited in embodiments of this application.
   A slot of a preset size may be reserved on the rack-type power splitter in embodiments of this application, so as to insert a matching card. The card may include a functional module such as GNSS signal splitting, GNSS signal surge protection, GNSS signal amplification, or optical-to-electrical conversion. In this way, after the card is inserted into the slot, the rack-type power splitter can satisfy function deployment for a GNSS base station in scenarios such as active splitting and remote deployment of a GNSS antenna.
(6) The terms "system" and "network" in embodiments of this application may be used interchangeably. "At least one" means one or more, and "a plurality of" means two or more. The term "and/or" describes an association relationship between associated objects and indicates that three relationships may exist. For example, A and/or B may indicate the following cases: Only A exists, both A and B exist, and only B exists, where A and B may be singular or plural. The character "/" generally indicates an "or" relationship between associated objects. "At least one of the following items (pieces)" or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

In addition, unless otherwise stated, ordinal numbers such as "first" and "second" in embodiments of this application are used to distinguish between a plurality of objects, but are not intended to limit an order, a time sequence, priorities, or importance of the plurality of objects. For example, a first priority criterion and a second priority criterion are merely used to distinguish between different criteria, but do not indicate different content, priorities, importance, or the like of the two criteria.

In addition, the terms "include/comprise" and "have" in the embodiments, claims, and accompanying drawings of this application are not exclusive. For example, a process, method, system, product, or device including a series of steps or modules is not limited to the listed steps or modules, and may further include a step or module that is not listed.

The technical solutions in embodiments of this application may be applied to base stations in various communications systems, for example, deployment of base stations in scenarios such as a long term evolution (long term evolution, LTE) system, a fifth-generation (5th Generation, 5G) system such as a new radio access technology (new radio access technology, NR), and a future communications system such as a 6G system.

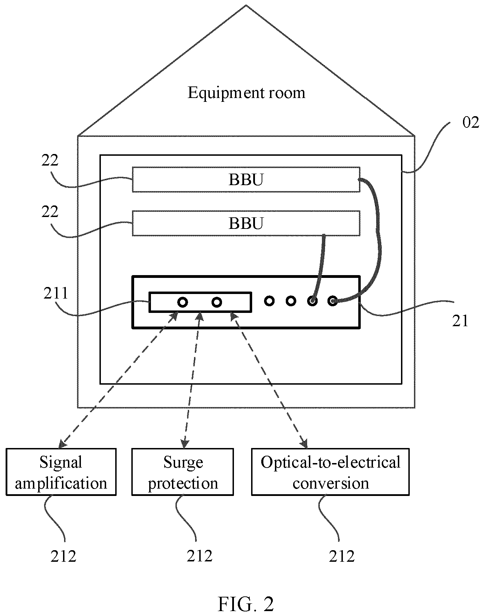

FIG. 2 is a schematic diagram of a structure of a possible GNSS signal distribution system according to the claimed invention. A GNSS signal distribution system 02 includes at least one rack-type power splitter 21 and at least two BBUs 22. The rack-type power splitter 21 and the BBUs 22 each are installed on a rack (for example, a standard 19-inch rack). A size of the rack-type power splitter 21 may be 1U, 2U, 3U, or the like. At least one slot 211 (only one slot 211 is shown in FIG. 2) is disposed on the rack-type power splitter 21, and a size of the slot 211 may be a preset size.

The GNSS signal distribution system 02 may further include at least one card 212, and the card 212 may be inserted into and removed from the slot 211.

The rack-type power splitter 21 may support a GNSS signal splitting function. The GNSS signal splitting function may be integrated in the card 212 (the rack-type power splitter 21 can implement the GNSS signal splitting function only when the card 212 is inserted). The GNSS signal splitting function may alternatively be built in the rack-type power splitter 21 (that is, the rack-type power splitter 21 can implement the GNSS signal splitting function even when the card 212 is not inserted). This is not limited in this embodiment of this application.

For example, the GNSS signal splitting function may be integrated in the card 212. An output end of the rack-type power splitter 21 is connected to each of the at least two BBUs, and an input end of the rack-type power splitter 21 is connected to a GNSS antenna outside an equipment room. After the card 212 is inserted into the slot 211, the card 212 is connected to the slot 211, and the card 212 cooperates with the slot 211 to distribute a GNSS signal (sent by the GNSS antenna) to different BBUs in the at least two BBUs connected to the slot 211.

The card 212 may support another function in addition to the GNSS signal distribution function, for example, a function such as signal amplification, surge protection, source selection, power supply, or optical-to-electrical conversion, so as to meet a deployment requirement of the another function. This is not specifically limited herein.

It should be understood that, in this embodiment of this application, after the card 212 is inserted into the slot 211, the card 212 may be considered as a part of the rack-type power splitter 21. The following describes several possible card design schemes of the card 212 by using several examples.

### Example 1: card design supporting an active splitting scenario

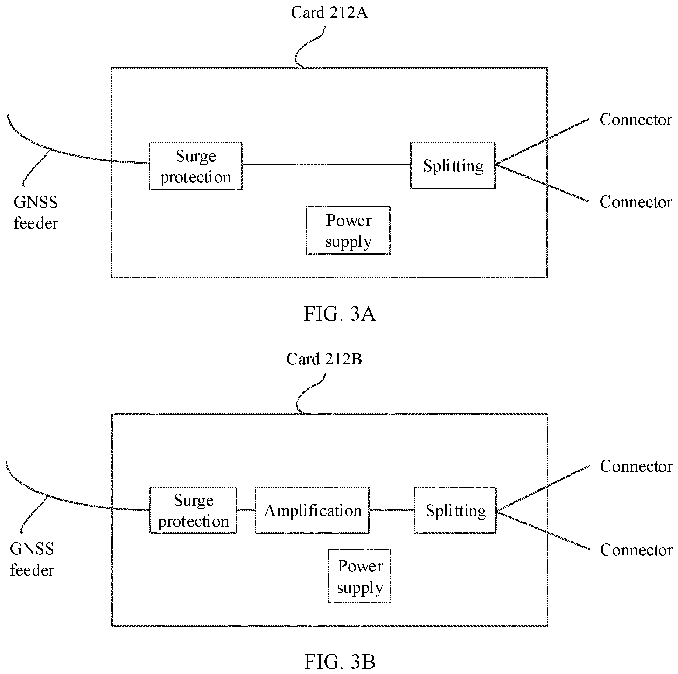

FIG. 3A is a schematic diagram of a structure of a possible card according to an embodiment of this application. The card may be configured to deploy a GNSS base station in the active splitting scenario. As shown in FIG. 3A, the card 212A may include the following.
(1) Surge protection module: configured to perform surge protection processing on an antenna to implement a GNSS signal surge protection function. Optionally, a specific implementation of a surge protector may be a surge protective device (surge protective device, SPD), to be specific, an apparatus for protecting a device by suppressing a transient overvoltage and a bypass surge current, and needs to include at least one nonlinear module. The SPD may be formed by components such as a discharge gap, a gas discharge tube (GDT), a metal oxide varistor (MOV), a silicon avalanche diode (SAD), a Zener diode, a filter, a fuse, and the like. A type of the SPD may be a voltage switching type (gap type) SPD, a voltage limiting type SPD, a combination type SPD, or the like.
(2) Splitting module, which may be specifically a GNSS signal power splitter, and is configured to implement the GNSS signal splitting function, that is, splitting a GNSS signal for sending to different BBUs. It should be noted that, in FIG. 3A, one connector is disposed on each GNSS signal branch, and the connector is configured to connect to a corresponding BBU.
(3) Power supply module: configured to supply power to the foregoing modules in the GNSS signal distribution system.

It should be understood that, a functional structure of the card in FIG. 3A is merely a possible example in the active splitting scenario. In specific implementation, the card may have more or fewer functional modules than the functional modules in FIG. 3A. This is not limited herein.

For example, FIG. 3B shows another possible example of a card in the active splitting scenario. Compared with the card 212A, the card 212B has an amplification module added between the surge protection module and the splitting module, so that a GNSS signal is amplified before being split.

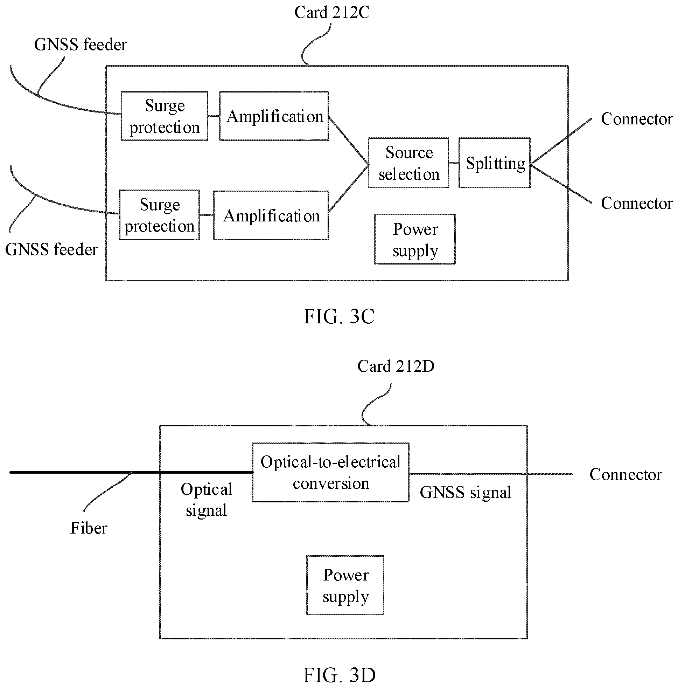

In some other possible designs, the card 212 may also support a function of 1+1 fault redundancy protection for GNSS antennas. For example, FIG. 3C is a schematic diagram of still another possible card according to an embodiment of this application.

The card 212C includes two antenna branches, which are respectively connected to two different GNSS antennas. The surge protection module and the amplification module are disposed on each branch, so as to implement the surge protection and amplification functions on GNSS signals. The card 212C further includes a source selection module, configured to support the GNSS base station in selecting either of the two antenna branches to receive the GNSS signal. In this way, when one antenna branch is faulty, the source selection module may switch to the other antenna branch for receiving from a signal source, so as to implement the function of 1+1 fault redundancy protection for the GNSS antennas. Certainly, to support signal splitting, the card 212C may further include a splitting module, configured to split the GNSS signal for sending to different BBUs. In addition, the card 212C may further include a power supply module, which feeds power to the GNSS antennas when the GNSS antennas have no independent power supply.

### Example 2: card design supporting a remote antenna deployment scenario

FIG. 3D is a schematic diagram of a structure of yet another possible card according to an embodiment of this application. The card 212D may be configured to deploy a GNSS base station in the remote antenna deployment scenario. As shown in FIG. 3D, the card 212D may include an optical-to-electrical conversion module, configured to convert an optical signal transmitted from a remote fiber 3 into an electrical signal, or obtain, through demodulation, a GNSS signal modulated in the optical signal. Optionally, the card 212D may further include a power supply module. Optionally, the card 212D may further include a fiber distance measurement module, configured to support fiber distance measurement. For example, an optical time-domain reflectometer (optical time-domain reflectometer, OTDR) module may be disposed to automatically measure a fiber distance between a GNSS antenna and the equipment room, so as to further determine a distance between the GNSS antenna and the equipment room.

It should be understood that, if the splitting function is not set in the card 212D, another component may be disposed in the rack-type power splitter to implement the signal splitting function. For example, another card having the splitting function may be disposed on the rack-type power splitter, or a splitting module may be built in the rack-type power splitter.

FIG. 3D is a schematic diagram of card functions in a scenario in which the GNSS antenna has an independent power supply module. In specific implementation, if the GNSS antenna does not have independent power supply, the card may further supply photovoltaic power to the remote antenna.

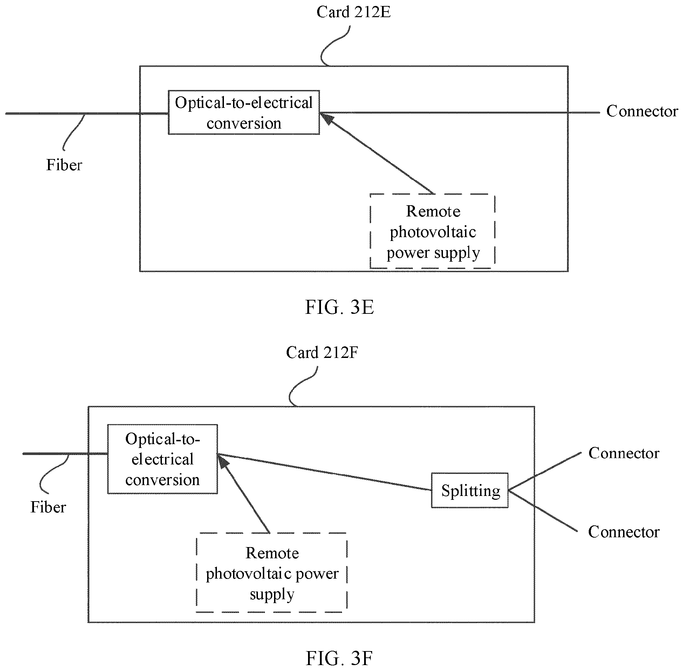

For example, FIG. 3E is a schematic diagram of still yet another possible card according to an embodiment of this application. Compared with the card 212D, the card 212E has a photovoltaic power supply module added. The photovoltaic power supply module is configured to supply photovoltaic power to the remote GNSS antenna, that is, transmit electric energy to the GNSS antenna through a fiber.

Certainly, in specific implementation, the card designs in the remote antenna deployment scenario and the active splitting scenario may alternatively be combined with each other for implementation, that is, the card supports both the active splitting scenario and the remote antenna deployment scenario.

### Example 3: card design supporting an active splitting scenario and a remote antenna deployment scenario

FIG. 3F is a schematic diagram of a structure of a further possible card according to an embodiment of this application. The card 212F may be configured to deploy a GNSS base station in the remote antenna deployment scenario and the active splitting scenario. The card 212F includes an optical-to-electrical conversion module, a remote photovoltaic power supply module, and a splitting module, and can implement both a remote antenna deployment function and a GNSS signal splitting function.

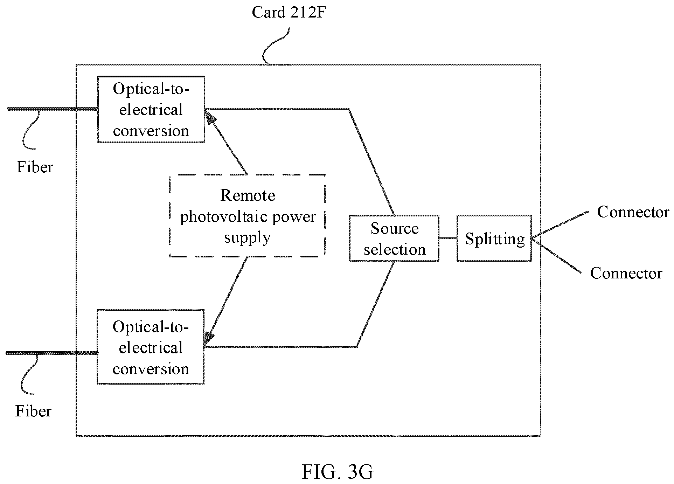

FIG. 3G is a schematic diagram of a structure of a still further possible card according to an embodiment of this application. The card 212G may be configured to deploy a GNSS base station in the remote antenna deployment scenario and the active splitting scenario. As shown in FIG. 3G, the card 212G includes two antenna branches, which are respectively connected to two remote GNSS antennas. Each branch is provided with functional modules such as an optical-to-electrical conversion module and a remote photovoltaic power supply module. Tail ends of the branches each is connected to a source selection module. The source selection module is configured to support the GNSS base station in selecting either of the two antenna branches to receive a GNSS signal. When one antenna branch is faulty, the rack-type power splitter may switch to the other antenna branch for receiving from a GNSS signal source, so as to implement a function of 1+1 fault redundancy protection for the GNSS antennas. Certainly, the card 212G further includes a splitting module, configured to split the GNSS signal for sending to different BBUs.

The foregoing examples list the design schemes for some possible functional modules of the card 212 in several scenarios. It should be understood that, in specific implementation, the functional modules in the card may have other specific design schemes. A person skilled in the art may combine different card designs in the foregoing examples or perform other similar transformations. This is not limited herein in this embodiment of this application.

The following describes the GNSS signal distribution system in this application with reference to specific application scenarios.

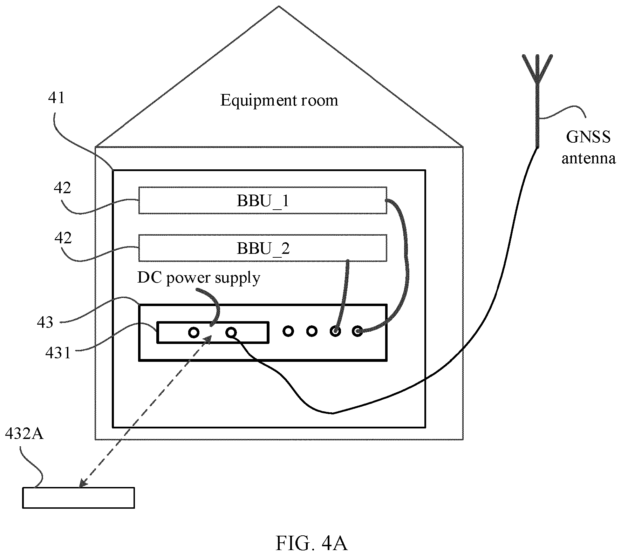

FIG. 4A is a schematic diagram of a GNSS signal distribution system in an active splitting scenario. The GNSS signal distribution system includes a rack 41, at least two BBUs 42 (two BBUs are used as an example in FIG. 4A, and more BBUs may be available in specific implementation) disposed on the rack 41, and a rack-type power splitter 43 disposed on the rack 41. The rack-type power splitter 43 is provided with a slot 431 of a preset size. The rack-type power splitter 43 may further include a card 432A. The card 432A is adapted to the slot 431 in size and function.

After the card 432A is inserted into the slot 431, the rack-type power splitter 43 can receive a GNSS signal transmitted from a GNSS antenna, perform distribution processing on the GNSS signal to generate two GNSS signals, and send the two distributed GNSS signals respectively to BBU_1 and BBU_2 connected to the rack-type power splitter 43.

There may be a plurality of types of cards 432A, provided that the cards can support a signal splitting function. This is not limited herein. For example, the card 432A may be the card 212A shown in FIG. 3A, the card 212B shown in FIG. 3B, or the like. When different types of cards are inserted into the slot 431, the rack-type power splitter 43 can implement the GNSS signal splitting function, and can further implement other different functions. For example, when the card 212A shown in FIG. 3A is inserted, the rack-type power splitter 43 can perform surge protection and splitting processing on the GNSS signal. For another example, when the card 212B shown in FIG. 3B is inserted, the rack-type power splitter 43 can perform surge protection, amplification, and splitting processing on the GNSS signal.

In this embodiment of this application, the rack-type power splitter is installed on the rack, and the slot is designed in the rack-type power splitter, so as to support insertion of a card with built-in functions such as splitting, surge protection, and signal amplification. The rack-type power splitter may be configured to externally connect to a GNSS feeder, to complete splitting of the GNSS signal for sending to a plurality of BBUs. In one aspect, deployment difficulty of the GNSS base station can be reduced. In another aspect, externally connected functional components such as a power splitter, a surge protector, and an amplifier can be prevented from separately occupying an extra space in an equipment room, thereby effectively improving space utilization of the equipment room.

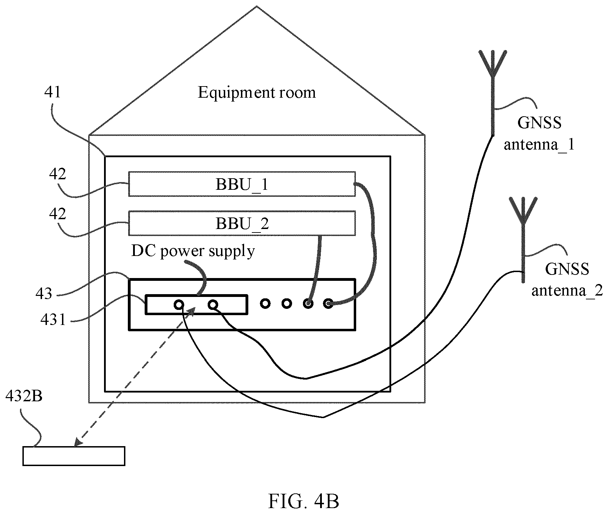

FIG. 4B is another schematic diagram of a GNSS signal distribution system in an active splitting scenario. A GNSS base station has two GNSS antennas (GNSS antenna_1 and GNSS antenna_2). The GNSS signal distribution system may receive a GNSS signal from either of the two GNSS antennas. Correspondingly, a card 432B in the GNSS signal distribution system shown in FIG. 4B can support selecting either of GNSS antenna_1 and GNSS antenna_2 for access, for example, selecting GNSS antenna_1 for access. When GNSS_1 is faulty and cannot receive the GNSS signal, the card 432B can switch to GNSS_2 to receive the GNSS signal.

There may be a plurality of types of cards 432B, provided that the cards can support a source selection function and a GNSS signal splitting function (provided that the cards can support the source selection function if the GNSS signal splitting function is provided on the rack-type power splitter 43). This is not limited herein. For example, the card 432B may be the card 212C shown in FIG. 3C.

It should be understood that, in different implementations, more GNSS antennas may be disposed on the GNSS base station, and correspondingly, the card may further support a source selection function with more channels.

In this embodiment of this application, the rack-type power splitter is installed on the rack, and the slot is designed in the rack-type power splitter, so as to support insertion of a card with built-in functions such as source selection, splitting, and surge protection. The rack-type power splitter may be configured to externally connect to a GNSS feeder. This not only can reduce deployment difficulty of the GNSS base station and improve space utilization of an equipment room, but also can implement a function of 1+1 fault redundancy protection for the GNSS antennas, thereby improving reliability of the GNSS base station.

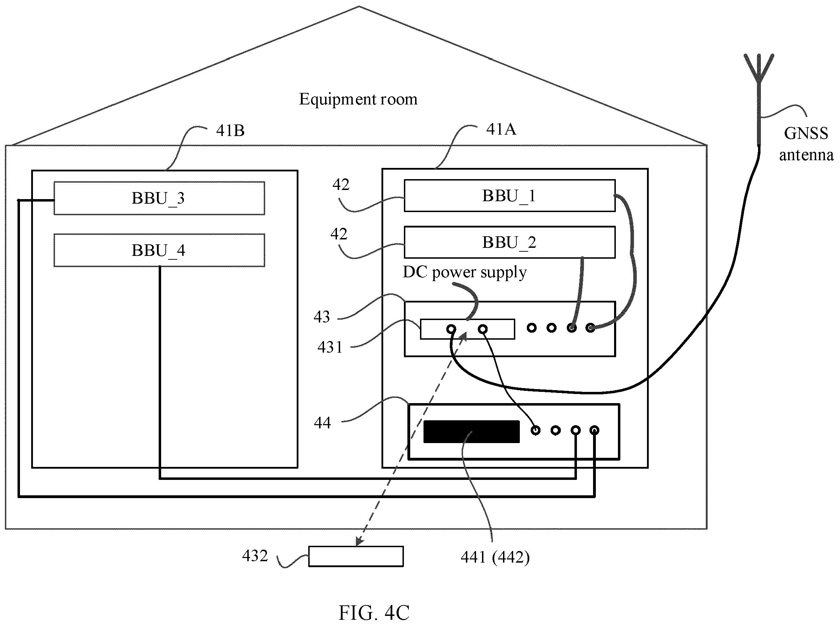

FIG. 4C is still another schematic diagram of a GNSS signal distribution system in an active splitting scenario. Two racks, namely, a rack 41A and a rack 41B, are disposed in an equipment room of a GNSS base station. The GNSS signal distribution system includes four BBUs: BBU_1 and BBU_2 are disposed on the rack 41A, and BBU_3 and BBU 4 are disposed on the rack 41B. The GNSS signal distribution system further includes an active rack-type power splitter 43 (with DC power supply) and a passive rack-type power splitter 44, both of which are disposed on the rack 41A. A signal input end of the active rack-type power splitter 43 is connected to a GNSS antenna, and a signal output end thereof is connected to BBU_1 and BBU_2. The active rack-type power splitter 43 is provided with a slot 431 and a card 432 matching the slot 431. For a specific implementation of the card 432, refer to the specific implementation of the card shown in FIG. 3A, FIG. 3B, FIG. 3C, or the like.

A signal input end of the passive rack-type power splitter 44 is connected to the active rack-type power splitter 43, and a signal output end thereof is connected to BBU_3 and BBU_4. The passive rack-type power splitter 44 is provided with a slot 441 and a card 442 matching the slot 441. The card 442 herein may be a filler panel, that is, the card 442 does not have a signal processing function.

After a GNSS signal of the GNSS antenna is transmitted to the active rack-type power splitter 43, the active rack-type power splitter 43 may perform processing such as amplification and splitting on the GNSS signal, and then send signals obtained after the splitting to BBU_1 and BBU_2. The active rack-type power splitter 43 may further transmit the GNSS signal from the GNSS antenna to the passive rack-type power splitter 44, and the passive rack-type power splitter 44 may split the GNSS signal for transmission to BBU_3 and BBU_4.

It should be understood that, in different implementations, the GNSS signal distribution system may have more passive rack-type power splitters or active rack-type power splitters, and more or fewer BBUs may be connected to each power splitter. This is not limited herein.

In this embodiment of this application, by using the design in which the active rack-type power splitter 43 and the passive rack-type power splitter 44 are both disposed on the rack, a quantity of GNSS signal channels in the GNSS signal distribution system may be further increased.

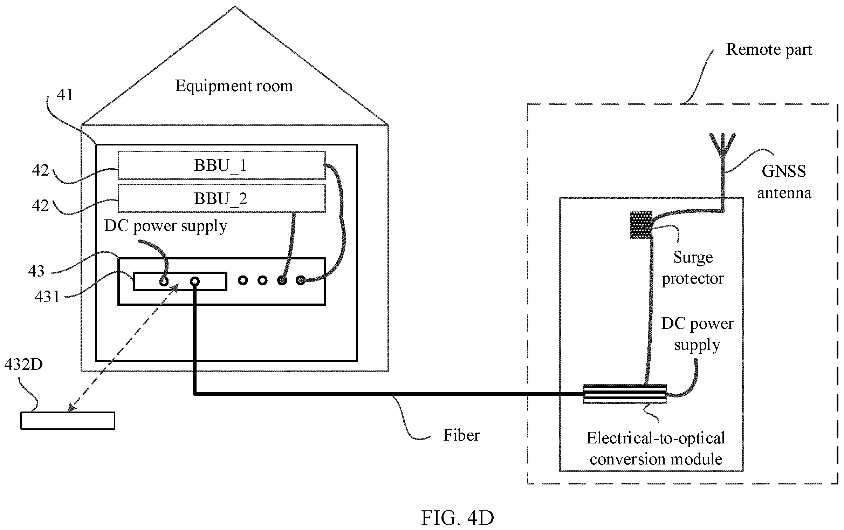

FIG. 4D is a schematic diagram of a GNSS signal distribution system in a remote antenna deployment scenario. The GNSS signal distribution system includes a rack 41, two BBUs 42 disposed on the rack 41, and a rack-type power splitter 43 disposed on the rack 41. It should be understood that, two BBUs are used as an example in FIG. 4D. In specific implementation, more BBUs may be available. This is not limited herein. The rack-type power splitter 43 is provided with a slot 431 of a preset size. The rack-type power splitter 43 may further include a card 432D. The card 432D is adapted to the slot 431 in size and function.

After the card 432D is inserted into the slot 431, the rack-type power splitter 43 can use a fiber to receive an optical signal transmitted from a remote unit, perform optical-to-electrical conversion on the optical signal to restore a GNSS signal in a form of an electrical signal, perform distribution processing on the GNSS signal to generate two GNSS signals, and send the two GNSS signals respectively to BBU_1 and BBU _2 connected to the rack-type power splitter 43.

There may be a plurality of types of cards 432D. This is not limited in this embodiment of this application. For example, the card 432D may be the card 212D shown in FIG. 3D, the card 212E shown in FIG. 3E, the card 212F shown in FIG. 3F, or the like When the card 212D shown in FIG. 3D or the card 212E shown in FIG. 3E is inserted, because the card 212D and the card 212E do not have a splitting function, another component may be disposed in the rack-type power splitter 43 to perform further splitting processing on a GNSS signal output from a connector of the card 212D. For example, a splitting module built in the rack-type power splitter 43 splits an output signal of the card 212D or the card 212E. Alternatively, another card with a splitting function is further inserted into the rack-type power splitter 43 to split the output signal of the card 212D or the card 212E. When the card 212F shown in FIG. 3F is inserted, because the card 212F has a splitting function, the card in the rack-type power splitter 43 may directly complete processing such as optical-to-electrical conversion and signal splitting. In addition, when the card shown in FIG. 3E is inserted, because the card 212E has a photovoltaic power supply function, no DC power supply may be disposed in the remote unit, and the rack-type power splitter transmits electric energy to the remote unit through a fiber.

In this embodiment of this application, the rack-type power splitter is installed in the rack to implement the GNSS signal splitting function for sending to a plurality of BBUs. In addition, the slot is further disposed on the rack-type power splitter to insert a card supporting the GNSS signal optical-to-electrical conversion function. The rack-type power splitter is configured to externally connect to a fiber to implement a remote GNSS deployment function. This not only can reduce deployment difficulty of the GNSS base station in the remote antenna deployment scenario, but also can prevent an externally connected optical-to-electrical conversion component from occupying an extra space, thereby improving space utilization of an equipment room.

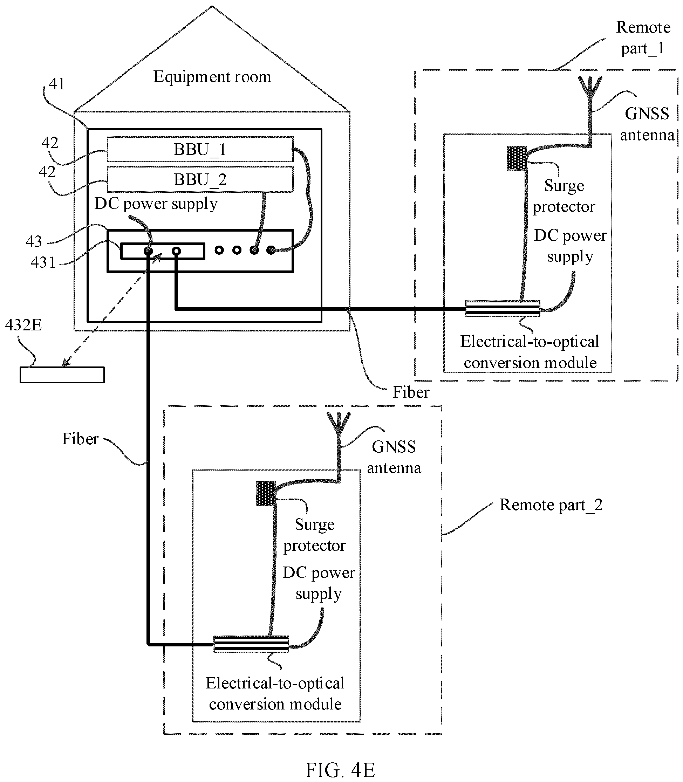

FIG. 4E is another schematic diagram of a GNSS signal distribution system in a remote antenna deployment scenario. Different from that in FIG. 4D, a GNSS base station includes two remote GNSS antennas, and the GNSS signal distribution system inside an equipment room may select one GNSS antenna for signal receiving. When one GNSS antenna is faulty, the GNSS signal distribution system can switch to the other antenna to continue signal receiving, so as to implement a function of 1+1 fault redundancy protection for the GNSS antennas. A card 432E in the GNSS signal distribution system can support functions such as optical-to-electrical conversion and splitting, and can further support the function of 1+1 fault redundancy protection for the antennas. For example, the card 432E may be specifically the card 212G shown in FIG. 3G.

In this embodiment of this application, the rack-type power splitter is installed on the rack, and the slot is designed in the rack-type power splitter, so as to support insertion of a card with built-in functions such as optical-to-electrical conversion and splitting. The rack-type power splitter may be configured to externally connect to a fiber to implement a remote GNSS deployment function. This not only can reduce deployment difficulty of the GNSS base station in the remote antenna deployment scenario and improve space utilization of the equipment room, but also can implement the function of 1+1 fault redundancy protection for the GNSS antennas in the remote antenna deployment scenario, thereby improving reliability of the GNSS base station.

## Claims

1. A global navigation satellite system, GNSS, signal distribution system (02), configured to be disposed inside an equipment room of a GNSS base station and comprising:
at least two baseband units, BBUs, (22); and
a rack-type power splitter (21) connected to each of the at least two BBUs (22), wherein
the at least two BBUs (22) and the rack-type power splitter (21) are configured to be installed on a rack (41);
a slot (211) is configured to be disposed on the rack-type power splitter (21), and the slot (211) is configured to support at least one type of card; the GNSS signal distribution system (02) is further configured to, after a card (212) is inserted into the slot (211), connect the card (212) inserted into the slot (211) to the rack-type power splitter (21); and the rack-type power splitter (21) is configured to process a GNSS signal received from a GNSS antenna outside the equipment room based on a functional module of the card (212) inserted into the slot (211), and distribute processed GNSS signals to the at least two BBUs (22).

2. The GNSS signal distribution system according to claim 1, wherein the functional module comprises one or more of a signal amplification module, a surge protection module, a source selection module, a power supply module, an optical-to-electrical conversion module, a fiber distance measurement module, or a photovoltaic power supply module.

3. The GNSS signal distribution system according to claim 1 or 2, wherein a signal splitting module is further configured to be disposed on the rack-type power splitter, and the splitting module is connected to each of the at least two BBUs; and
the rack-type power splitter is further configured to: after processing, based on the functional module of the card inserted into the slot, the GNSS signal received from the GNSS antenna, distribute the processed GNSS signals to the at least two BBUs based on the signal splitting module.

4. The GNSS signal distribution system according to claim 1 or 2, wherein the functional module comprises a signal splitting module, and the rack-type power splitter is connected to each of the at least two BBUs through the splitting module inserted into the slot; and
the rack-type power splitter is specifically configured to distribute the received GNSS signal to the at least two BBUs based on the signal splitting module.

5. The GNSS signal distribution system according to claim 1 or 2, wherein the slot supports insertion and removal of a first card, and the first card comprises a first antenna branch, a second antenna branch, a source selection module, and a signal splitting module;
the first antenna branch is configured to receive a GNSS signal sent by a first GNSS antenna;
the second antenna branch is configured to receive a GNSS signal sent by a second GNSS antenna;
the source selection module is configured to select one of the first antenna branch and the second antenna branch for access; and
the signal splitting module is configured to distribute, to the at least two BBUs, a GNSS signal output by the antenna branch selected by the source selection module for access.

6. The GNSS signal distribution system according to claim 5, wherein the source selection module is further configured to: when detecting that the accessed antenna branch is faulty, switch to another antenna branch for access.

7. The GNSS signal distribution system according to claim 5, wherein a surge protection module and an amplification module are configured to be disposed on each of the first antenna branch and the second antenna branch;
the first antenna branch is further configured to perform surge protection and amplification processing on the first GNSS signal; and
the second antenna branch is further configured to perform surge protection and amplification processing on the second GNSS signal.

8. The GNSS signal distribution system according to claim 1 or 2, wherein the slot supports insertion and removal of a second card, and the second card comprises an optical-to-electrical conversion module and a signal splitting module;
the optical-to-electrical conversion module is configured to perform optical-to-electrical conversion processing on an optical signal received from a fiber, to generate a GNSS signal, wherein the optical signal is configured to be sent to the fiber for transmission after a remote antenna unit performs electrical-to-optical conversion on the GNSS signal received by the GNSS antenna; and
the signal splitting module is configured to distribute the GNSS signal generated by the optical-to-electrical conversion module to the at least two BBUs.

9. The GNSS signal distribution system according to claim 8, wherein the second card further comprises a photovoltaic power supply module, configured to supply electric energy to the remote antenna unit through the fiber.

10. The GNSS signal distribution system according to claim 8, wherein the second card further comprises a fiber distance measurement module, configured to determine a fiber distance between the GNSS antenna and the GNSS signal distribution system based on transmission time of the optical signal in the fiber.

11. The GNSS signal distribution system according to any one of claims 1 to 10, wherein the at least two BBUs and the rack-type power splitter are all installed on a standard 19-inch rack.

12. The GNSS signal distribution system according to any one of claims 1 to 10, wherein a size of the rack-type power splitter is 1U.

13. A system comprising a global navigation satellite system, GNSS, base station and the GNSS signal distribution system (02) according to any one of claims 1 to 12, wherein the GNSS base station comprises an equipment room and at least one remote antenna unit, wherein
the GNSS signal distribution system (02) is configured to be disposed inside the equipment room; and
the remote antenna unit is configured to receive a GNSS signal, and transmit the received GNSS signal to the GNSS signal distribution system (02).

14. The system according to claim 13, wherein the antenna remote unit comprises a GNSS antenna and an electrical-to-optical conversion module;
the GNSS antenna is configured to receive the GNSS signal; and
the electrical-to-optical conversion module is configured to perform electrical-to-optical conversion on the GNSS signal received by the GNSS antenna, to generate an optical signal, and transmit the optical signal to the GNSS signal distribution system through a fiber.

## Patentansprüche

1. "Global Navigation Satellite System"-, GNSS-, Signalverteilungssystem (02), das dafür ausgelegt ist, in einem Ausrüstungsraum einer GNSS-Basisstation eingerichtet zu sein, und das folgende Elemente umfasst:
mindestens zwei Basisbandeinheiten, BBUs, (22); und
einen Rack-Leistungsaufteiler (21), der mit jeder der mindestens zwei BBUs (22) verbunden ist, wobei
die mindestens zwei BBUs (22) und der Rack-Leistungsaufteiler (21) zur Installation in einem Rack (41) ausgelegt sind;
ein Steckplatz (211) dafür ausgelegt ist, am Rack-Leistungsaufteiler (21) eingerichtet zu sein, und der Steckplatz (211) dafür ausgelegt ist, mindestens eine Art von Karte zu unterstützen; das GNSS-Signalverteilungssystem (02) ferner so ausgelegt ist, dass es, nachdem eine Karte (212) in den Steckplatz (211) eingesetzt ist, die in den Steckplatz (211) eingesetzte Karte (212) mit dem Rack-Leistungsaufteiler (21) verbindet; und der Rack-Leistungsaufteiler (21) dafür ausgelegt ist, ein von einer GNSS-Antenne außerhalb des Ausrüstungsraums empfangenes GNSS-Signal auf der Grundlage eines Funktionsmoduls der in den Steckplatz (211) eingesetzten Karte (212) zu verarbeiten und die verarbeiteten GNSS-Signale an die mindestens zwei BBUs (22) zu verteilen.

2. GNSS-Signalverteilungssystem nach Anspruch 1, wobei das Funktionsmodul eines oder mehrere von einem Signalverstärkungsmodul, einem Überspannungsschutzmodul, einem Quellenauswahlmodul, einem Stromversorgungsmodul, einem Optisch-zu-Elektrisch-Umwandlungsmodul, einem Faserabstandsmessmodul oder einem Photovoltaik-Stromversorgungsmodul umfasst.

3. GNSS-Signalverteilungssystem nach Anspruch 1 oder 2, wobei ein Signalaufteilungsmodul ferner dafür ausgelegt ist, am Rack-Leistungsaufteiler eingerichtet zu sein, und das Aufteilungsmodul mit jeder der mindestens zwei BBUs verbunden ist; und
der Rack-Leistungsaufteiler ferner für folgenden Vorgang ausgelegt ist: nach dem Verarbeiten, auf der Grundlage des Funktionsmoduls der in den Steckplatz eingesetzten Karte, des von der GNSS-Antenne empfangenen GNSS-Signals, Verteilen der verarbeiteten GNSS-Signale auf der Grundlage des Signalaufteilungsmoduls an die mindestens zwei BBUs.

4. GNSS-Signalverteilungssystem nach Anspruch 1 oder 2, wobei das Funktionsmodul ein Signalaufteilungsmodul umfasst und der Rack-Leistungsaufteiler mit jeder der mindestens zwei BBUs über das in den Steckplatz eingesetzte Aufteilungsmodul verbunden ist; und
der Rack-Leistungsaufteiler spezifisch dafür ausgelegt ist, das empfangene GNSS-Signal auf der Grundlage des Signalaufteilungsmoduls auf die mindestens zwei BBUs zu verteilen.

5. GNSS-Signalverteilungssystem nach Anspruch 1 oder 2, wobei der Steckplatz Einsetzen und Entfernen einer ersten Karte unterstützt und die erste Karte einen ersten Antennenzweig, einen zweiten Antennenzweig, ein Quellenauswahlmodul und ein Signalaufteilungsmodul umfasst;
der erste Antennenzweig dafür ausgelegt ist, ein GNSS-Signal zu empfangen, das von einer ersten GNSS-Antenne gesendet wird;
der zweite Antennenzweig dafür ausgelegt ist, ein GNSS-Signal zu empfangen, das von einer zweiten GNSS-Antenne gesendet wird;
das Quellenauswahlmodul dafür ausgelegt ist, einen vom ersten Antennenzweig und dem zweiten Antennenzweig für den Zugriff auszuwählen; und
das Signalaufteilungsmodul dafür ausgelegt ist, ein GNSS-Signal, das von dem durch das Quellenauswahlmodul für den Zugriff ausgewählten Antennenzweig ausgegeben wird, an die mindestens zwei BBUs zu verteilen.

6. GNSS-Signalverteilungssystem nach Anspruch 5, wobei das Quellenauswahlmodul ferner für folgenden Vorgang ausgelegt ist: wenn erkannt wird, dass der Antennenzweig, auf den zugegriffen wird, fehlerhaft ist, Umschalten auf einen anderen Antennenzweig für den Zugriff.

7. GNSS-Signalverteilungssystem nach Anspruch 5, wobei ein Überspannungsschutzmodul und ein Verstärkungsmodul dafür ausgelegt sind, an jedem vom ersten Antennenzweig und dem zweiten Antennenzweig eingerichtet zu sein;
der erste Antennenzweig ferner dafür ausgelegt ist, Überspannungsschutz und Verstärkungsverarbeitung für das erste GNSS-Signal durchzuführen; und
der zweite Antennenzweig ferner dafür ausgelegt ist, Überspannungsschutz und Verstärkungsverarbeitung für das zweite GNSS-Signal durchzuführen.

8. GNSS-Signalverteilungssystem nach Anspruch 1 oder 2, wobei der Steckplatz Einsetzen und Entfernen einer zweiten Karte unterstützt und die zweite Karte ein Optisch-zu-Elektrisch-Umwandlungsmodul und ein Signalaufteilungsmodul umfasst; das Optisch-zu-Elektrisch-Umwandlungsmodul dafür ausgelegt ist, Optisch-zu-Elektrisch-Umwandlungverarbeitung an einem von einer Faser empfangenen optischen Signal zum Erzeugen eines GNSS-Signals durchzuführen, wobei das optische Signal so ausgelegt ist, dass es zur Übertragung an die Faser gesendet wird, nachdem eine abgesetzte Antenneneinheit Elektrisch-zu-Optisch-Umwandlung an dem von der GNSS-Antenne empfangenen GNSS-Signal durchgeführt hat; und
das Signalaufteilungsmodul dafür ausgelegt ist, das vom Optisch-zu-Elektrisch-Umwandlungsmodul erzeugte GNSS-Signal an die mindestens zwei BBUs zu verteilen.

9. GNSS-Signalverteilungssystem nach Anspruch 8, wobei die zweite Karte ferner ein Photovoltaik-Stromversorgungsmodul umfasst, das dafür ausgelegt ist, der abgesetzten Antenneneinheit über die Faser elektrische Energie zuzuführen.

10. GNSS-Signalverteilungssystem nach Anspruch 8, wobei die zweite Karte ferner ein Faserabstandsmessmodul umfasst, das dafür ausgelegt ist, einen Faserabstand zwischen der GNSS-Antenne und dem GNSS-Signalverteilungssystem auf der Grundlage der Übertragungszeit des optischen Signals in der Faser zu bestimmen.

11. GNSS-Signalverteilungssystem nach einem der Ansprüche 1 bis 10, wobei die mindestens zwei BBUs und der Rack-Leistungsaufteiler alle in einem 19-Zoll-Standard-Rack installiert sind.

12. GNSS-Signalverteilungssystem nach einem der Ansprüche 1 bis 10, wobei eine Größe des Rack-Leistungsaufteilers 1U beträgt.

13. System, umfassend eine "Global Navigation Satellite System"-, GNSS-, Basisstation und das GNSS-Signalverteilungssystem (02) nach einem der Ansprüche 1 bis 12, wobei die GNSS-Basisstation einen Ausrüstungsraum und mindestens eine abgesetzte Antenneneinheit umfasst, wobei
das GNSS-Signalverteilungssystem (02) dafür ausgelegt ist, innerhalb des Ausrüstungsraums eingerichtet zu sein; und
die abgesetzte Antenneneinheit dafür ausgelegt ist, ein GNSS-Signal zu empfangen und das empfangene GNSS-Signal an das GNSS-Signalverteilungssystem (02) zu senden.

14. System nach Anspruch 13, wobei die abgesetzte Antenneneinheit eine GNSS-Antenne und ein Elektrisch-zu-Optisch-Umwandlungsmodul umfasst;
die GNSS-Antenne dafür ausgelegt ist, das GNSS-Signal zu empfangen; und
das Elektrisch-zu-Optisch-Umwandlungsmodul dafür ausgelegt ist, Elektrisch-zu-Optisch-Umwandlung an dem von der GNSS-Antenne empfangenen GNSS-Signal zum Erzeugen eines optischen Signals durchzuführen, und das optische Signal über eine Faser an das GNSS-Signalverteilungssystem zu senden.

## Revendications

1. Système de distribution de signal de système mondial de navigation par satellite, GNSS (02), configuré pour être disposé à l'intérieur d'une salle d'équipement d'une station de base GNSS et comprenant :
au moins deux unités de bande de base, BBU, (22) ; et
un diviseur de puissance de type pour bâti (21) connecté à chacune des au moins deux BBU (22), dans lequel
les au moins deux BBU (22) et le diviseur de puissance de type pour bâti (21) sont configurés pour être installés sur un bâti (41) ;
une fente (211) est configurée pour être disposée sur le diviseur de puissance de type pour bâti (21), et la fente (211) est configurée pour supporter au moins un type de carte ; le système de distribution de signal GNSS (02) est en outre configuré pour, après qu'une carte (212) a été insérée dans la fente (211), connecter la carte (212) insérée dans la fente (211) au diviseur de puissance de type pour bâti (21) ; et le diviseur de puissance de type pour bâti (21) est configuré pour traiter un signal GNSS reçu en provenance d'une antenne GNSS à l'extérieur de la salle d'équipement sur la base d'un module fonctionnel de la carte (212) insérée dans la fente (211), et distribuer des signaux GNSS traités aux au moins deux BBU (22).

2. Système de distribution de signal GNSS selon la revendication 1, dans lequel le module fonctionnel comprend un ou plusieurs éléments parmi un module d'amplification de signal, un module de protection contre les surtensions, un module de sélection de source, un module de source d'alimentation, un module de conversion optique-électrique, un module de mesure de distance de fibre, ou un module de source d'alimentation photovoltaïque.

3. Système de distribution de signal GNSS selon la revendication 1 ou la revendication 2, dans lequel un module de division de signal est en outre configuré pour être disposé sur le diviseur de puissance de type pour bâti, et le module de division est connecté à chacune des au moins deux BBU ; et
le diviseur de puissance de type pour bâti étant en outre configuré pour : après le traitement, sur la base du module fonctionnel de la carte insérée dans la fente, du signal GNSS reçu en provenance de l'antenne GNSS, distribuer les signaux GNSS traités aux au moins deux BBU sur la base du module de division de signal.

4. Système de distribution de signal GNSS selon la revendication 1 ou la revendication 2, dans lequel le module fonctionnel comprend un module de division de signal, et le diviseur de puissance de type pour bâti est connecté à chacune des au moins deux BBU par le biais du module de division inséré dans la fente ; et
le diviseur de puissance de type pour bâti est spécifiquement configuré pour distribuer le signal GNSS reçu aux au moins deux BBU sur la base du module de division de signal.

5. Système de distribution de signal GNSS selon la revendication 1 ou la revendication 2, dans lequel la fente supporte l'insertion et le retrait d'une première carte, et la première carte comprend une première branche d'antenne, une deuxième branche d'antenne, un module de sélection de source, et un module de division de signal ;
la première branche d'antenne est configurée pour recevoir un signal GNSS envoyé par une première antenne GNSS ;
la deuxième branche d'antenne est configurée pour recevoir un signal GNSS envoyé par une deuxième antenne GNSS ;
le module de sélection de source est configuré pour sélectionner une branche d'antenne parmi la première branche d'antenne et la deuxième branche d'antenne pour accès ; et
le module de division de signal est configuré pour distribuer, aux au moins deux BBU, un signal GNSS fourni en sortie par la branche d'antenne sélectionnée par le module de sélection de source pour accès.

6. Système de distribution de signal GNSS selon la revendication 5, dans lequel le module de sélection de source est en outre configuré pour : lors de la détection que la branche d'antenne à laquelle il a été accédé est défectueuse, commuter vers une autre branche d'antenne pour accès.

7. Système de distribution de signal GNSS selon la revendication 5, dans lequel un module de protection contre les surtensions et un module d'amplification sont configurés pour être disposés sur chacune de la première branche d'antenne et de la deuxième branche d'antenne ;
la première branche d'antenne est en outre configurée pour réaliser un traitement de protection contre les surtensions et d'amplification sur le premier signal GNSS ; et
la deuxième branche d'antenne est en outre configurée pour réaliser un traitement de protection contre les surtensions et d'amplification sur le deuxième signal GNSS.

8. Système de distribution de signal GNSS selon la revendication 1 ou la revendication 2, dans lequel la fente supporte l'insertion et le retrait d'une deuxième carte, et la deuxième carte comprend un module de conversion optique-électrique et un module de division de signal ;
le module de conversion optique-électrique est configuré pour réaliser un traitement de conversion optique-électrique sur un signal optique reçu en provenance d'une fibre, pour générer un signal GNSS, le signal optique étant configuré pour être envoyé à la fibre pour une transmission après qu'une unité d'antenne distante réalise une conversion électrique-optique sur le signal GNSS reçu par l'antenne GNSS ; et
le module de division de signal est configuré pour distribuer le signal GNSS généré par le module de conversion optique-électrique aux au moins deux BBU.

9. Système de distribution de signal GNSS selon la revendication 8, dans lequel la deuxième carte comprend en outre un module de source d'alimentation photovoltaïque, configuré pour alimenter l'unité d'antenne distante en énergie électrique par le biais de la fibre.

10. Système de distribution de signal GNSS selon la revendication 8, dans lequel la deuxième carte comprend en outre un module de mesure de distance de fibre, configuré pour déterminer une distance de fibre entre l'antenne GNSS et le système de distribution de signal GNSS sur la base de la durée de transmission du signal optique dans la fibre.

11. Système de distribution de signal GNSS selon l'une quelconque des revendications 1 à 10, dans lequel les au moins deux BBU et le diviseur de puissance de type pour bâti sont tous installés sur un bâti standard de 19 pouces.

12. Système de distribution de signal GNSS selon l'une quelconque des revendications 1 à 10, dans lequel une taille du diviseur de puissance de type pour bâti est 1U.

13. Système comprenant une station de base de système mondial de navigation par satellite, GNSS, et le système de distribution de signal GNSS (02) selon l'une quelconque des revendications 1 à 12, la station de base GNSS comprenant une salle d'équipement et au moins une unité d'antenne distante,
le système de distribution de signal GNSS (02) étant configuré pour être disposé à l'intérieur de la salle d'équipement ; et
l'unité d'antenne distante étant configurée pour recevoir un signal GNSS, et transmettre le signal GNSS reçu au système de distribution de signal GNSS (02).

14. Système selon la revendication 13, dans lequel l'unité distante d'antenne comprend une antenne GNSS et un module de conversion électrique-optique ;
l'antenne GNSS est configurée pour recevoir le signal GNSS ; et
le module de conversion électrique-optique est configuré pour réaliser une conversion électrique-optique sur le signal GNSS reçu par l'antenne GNSS, afin de générer un signal optique, et transmettre le signal optique au système de distribution de signal GNSS par le biais d'une fibre.
